Europäisches Patentamt

European Patent Office

Office européen des brevets

(19)

(11) **EP 0 854 480 A1**

## (12) EUROPEAN PATENT APPLICATION

(43) Date of publication:
**22.07.1998 Bulletin 1998/30**

(51) Int. Cl.$^6$: **G11B 15/54**, G11B 15/48

(21) Application number: **97118199.5**

(22) Date of filing: **20.10.1997**

(84) Designated Contracting States:
**AT BE CH DE DK ES FI FR GB GR IE IT LI LU MC NL PT SE**

(30) Priority: **17.01.1997 US 786082**

(71) Applicant: **Tandberg Data ASA**
**0884 Oslo (NO)**

(72) Inventors:
- **Kvifte, Halvor**
  **1344 Haslum (NO)**

- **Strand, Steinar**
  **1405 Langhus (NO)**
- **Stavdhal, Hans**
  **1165 Oslo (NO)**
- **Hardeng, Erik**
  **0871 Oslo (NO)**

(74) Representative:
**Tönhardt, Marion, Dr.**
**Forrester & Boehmert,**
**Franz-Joseph-Strasse 38**
**80801 München (DE)**

### (54) Tape drive speed and tension control

(57) An apparatus and method for controlling the movement of a supply of magnetic tape from a first reel to a second reel providing motor controlled reels and at least one flutter roller, said motor control reels and said flutter roller having tachometers mounted for rotation along their axes, respectively. The tachometers send signals to a controller which ensures constant tape speed and tension in normal operation and also provides for a controlled winding speed when winding is instigated at a position close to an end of the tape. The apparatus and method also provides that upon instigation of winding a short period of tension increase is instigated by the reels which prevents slippage of tape on the reels during reading and writing.

FIG.1

EP 0 854 480 A1

## Description

### BACKGROUND OF THE INVENTION

The present invention relates to a tape drive and tape cassette arrangement and a method and apparatus for circulating a supply of tape from one of two reels within the cassette. One reel acts as a supply reel to a respective other of the reels acting as a respective take up reel. Particularly, the invention relates to a tape drive which provides a controlled tape tension and speed and particularly during start up and stopping, after winding, and during winding near an end-of-tape condition on the supply reel.

Prior art tape drives use a capstan and opposing pressure roller, insuring that the tape is moved with the speed of the capstan surface. Typical examples of such drives include video recorders, 4 millimeter and 8 millimeter tape drives, and some audio open reel recorders. Such drives are disclosed for example in U.S. Patents 4,984,111; 5,323,280; and 3,692,255.

Low speed video tape drives can include the capstan and pressure roller arrangement for translating the tape at a constant speed in addition to a means of turning the reels to wind the tape, such as described in U.S. Patents 4,190,869 and 4,390,909. A high density digital tape recorder needs to run its tape at a constant, low speed, typically 5-10 cm/s.

It is also known to control tape speed by direct tape speed measurement, such as by a tape roller and applying a correction signal to a take up reel motor such as disclosed in U.S. Patents 5,491,594; 4,696,439 or 4,514,672; or by calculating tape speed by reel tachometers and applying correction signals to the take up reel motor such as described in U.S. Patent 4,531,166.

### SUMMARY OF THE INVENTION

It is an object of the present invention to provide a tape drive having an accurate and precise speed control. It is an object of the present invention to provide a tape drive and cassette arrangement having an accurate and precise tension control of the supply of tape between the supply reel and take up reel. It is an object of the invention to provide a tape drive which controls tape winding near the end of tape condition. It is an object of the invention to provide a control for the tape drive which prevents tape skidding or slipping during read or write operation.

It is an object of the invention to provide a tape tension servo control which eliminates the need for mechanical measurement of tape tension.

According to the invention, a bi-directional tape drive is provided which includes tape rollers, such as flutter rollers, having accurate tachometers applied thereto. In order to assure precise tape tension measurement, rotational speed information from a flutter roller tachometer and a supply reel tachometer is used for tape tension control during normal operation. A controller is provided with a tape speed servo circuit which adjusts take up reel speed based on a speed signal from the flutter roller.

The tape is transported by use of a motor coupled to the take up reel. To achieve sufficient tape tension during reading or writing, a motor coupled to the supply reel is caused to brake slightly by energizing the motor. A tension servo circuit in the controller sets the supply reel motor current to gradually decrease according to the decreasing amount of tape which is wound on the supply reel. Accurate tape tension is important to ensure accurate reading of data from the tape, and writing data to the tape. The tape tension is adjusted by a tension calculation using a supply reel tachometer signal and a flutter roller tachometer signal and a predetermined relationship between motor current and these two tachometer signals, to control motor current. A measured motor current signal is fed back to the controller and the controller compares this current signal to a current amount calculated from the tachometer signals and adjusts a motor energizing signal accordingly to adjust the motor current, which adjusts tape tension. Thus, an actual mechanical tension measurement is obviated. This arrangement provides a minimum of motive mechanical parts to transport the tape at constant speed and tension.

The tape path consists of a number of stationary guides, and at least one tape roller. The tape roller has an integrated tachometer for tape speed measurements. This is a direct way to measure the tape speed. A second tape roller can be provided to obtain a symmetric tape path, which is advantageous in a bi-directional tape transport. The two tape rollers can be "flutter rollers" which absorb high frequency speed variations, known as flutter. The flutter rollers do not require opposing pressure rollers across a thickness of the tape. The flutter rollers press to one side of the tape. Lower frequency speed variations are compensated by the tape speed servo circuit.

According to the invention, the tape wrap angle around the flutter rollers is considerable to reduce the total tape friction, and with that reduce the tape tension at the take up reel, i.e., because the tape tension at the take up reel must compensate for total tape friction of the tape path. Both flutter rollers and both tape reels can have integrated tachometers to calculate tape speed and tension.

Tape tension is accurately controlled during start up of the tape reels, by setting the brake moment on the supply reel, regardless of the amount of tape wound on the supply reel, to the same level as calculated for a full-of-tape supply reel. This braking is gradually reduced when the tape tension servo circuit has received information about the speeds of the reels and at least one flutter roller, to make corrections.

The invention also provides a method to control tape winding speed (fast forward or reverse), when winding is initiated near to and towards the end of the tape on the supply reel. The winding speed control ensures that when the supply reel is fully unwound the tape does not separate from the supply reel or stop with an unacceptable tension shock. According to the function, a winding mode is prevented from winding at full speed until an electronic winding brake control has received enough information to ensure that there is enough tape length remaining until the end of the tape, "the stop length", to softly or gradually decelerate. If the distance is too short, the winding is maintained at a reduced speed.

A tape tension control on the supply reel is used to ensure that tape tension from the reel is constant. Simultaneously, the tape speed control on the take up reel is designed to ensure that the tape speed is as constant as possible. As a result of this control, take up reel tape tension will be almost constant, only compensating for variation of tape friction in the tape path. Thus, outer turns of tape on the take up reel are wound up with higher motor moments than the motor moments used while the inner turns on the take up reel are wound. Also, each time magnetic writing or reading is made after a period of winding in the same direction, the situation of harder wound outer turns on the take up reel occurs. The outer turns on the take up reel may from time to time skid or slip on the inner turns, and the risk is present for uncontrolled tape tension shock. To minimize this risk during magnetic writing or reading, each new period of writing or reading is started with a short controlled tension increase before the writing or reading itself takes place, to prevent tape tension shocks from occurring thereafter.

## BRIEF DESCRIPTION OF THE DRAWINGS

Figure 1 is a schematic plan view of a cassette and tape drive of the present invention;
Figure 2 is a partial perspective view of the tape drive and cassette shown in Figure 1 according to the invention; and
Figure 3 is a schematic flow sheet demonstrating the operation of the invention.

## DETAILED DESCRIPTION OF THE PREFERRED EMBODIMENTS

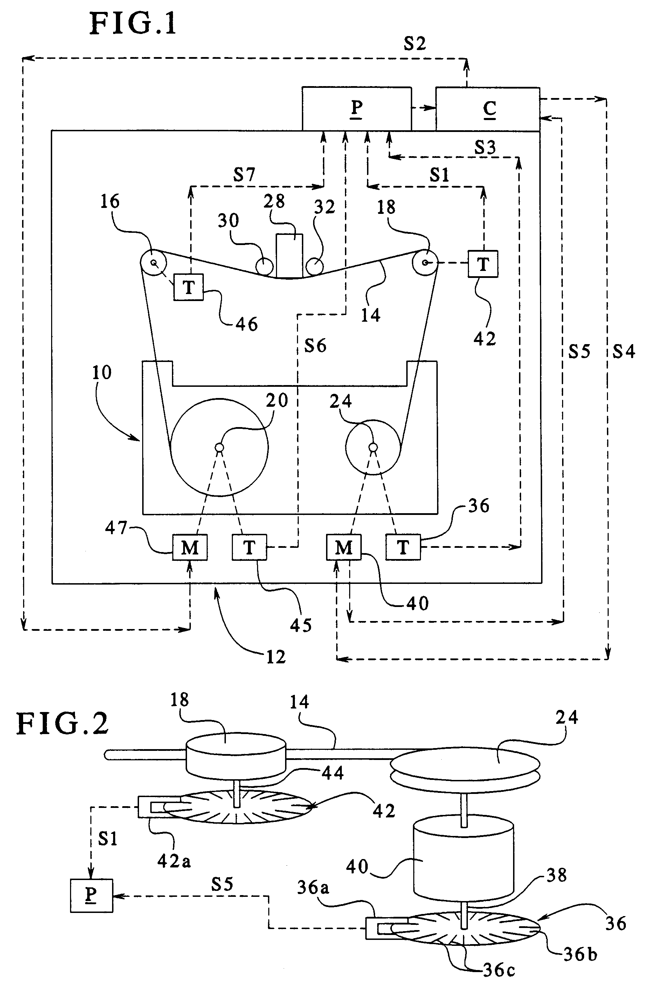

Figure 1 illustrates the general environment of the tape drive and cassette of the present invention. In this figure, a cassette 10 is located within the tape drive 12. Tape 14 has been extracted from the cassette and is partially wrapped around a first tape roller 16 and a second tape roller 18. These rollers can be flutter rollers, although any roller that is turned by circulating tape is encompassed by the invention. Unlike capstan rollers which coact with a pressure roller, flutter rollers are driven by one side of the tape only. Inside the cassette are a first reel 20 and a second reel 24. Depending on the direction of winding, one reel serves as supply reel and the respective other as take-up reel.

The direction of rotation of the supply and take up reel can be reversed for a reverse circulation of the magnetic tape.

As shown in Figure 2, at least one tape reel 24 acting for example as supply reel is provided with a reel pulse tachometer 36 rotatable about an axial shaft 38 of a tape reel motor 40. The tachometer 36 in the illustrated exemplary embodiment can be formed of a detector 36a and an optical coding disk 36b. The detector 36a is an optoelectronic scanner which senses marks or slots 36c on the disk 36b. A pulse processing or evaluation unit $\underline{P}$ is connected to a controller $\underline{C}$ (see Figure 1) that emits control signals to motor controllers during normal operation. The controller $\underline{C}$ can be a microprocessor. The pulse processor $\underline{P}$ can be incorporated into the controller $\underline{C}$ depending on its sophistication. Various methods of pulse tachometer processing for servo control are disclosed for example in U.S. Patents 5,491,594; 5,150,263; 4,531,166; 4,696,439; and 4,514,672.

At least one flutter roller 18 is also provided with a roller pulse tachometer 42 mounted on an axle 44 of the flutter roller 18. The tachometer 42 can be similarly configured to the tachometer 36. For a bi-directional tape drive and cassette, the respective other tape reel 20 and the respective other flutter roller 16 also have pulse tachometers 45, 46 respectively mounted axially on their rotating axles.

Returning to Figure 1, the controller $\underline{C}$ is provided which receives pulse information from the reel and roller tachometers 36, 42 by sensors 36a, 42a respectively via the pulse processor $\underline{P}$. This control $\underline{C}$ controls the motors driving or braking the reels 20, 24 to maintain constant tape speed and tension using a tape speed servo circuit and a tape tension servo circuit. Particularly, a motor 47 coupled to the take up reel 20 transports the tape from the supply reel 24 while the supply reel motor 40 brakes slightly. This simple control scheme using the take up and supply reel motors to adjust tension and tape speed requires a minimum of mechanical parts compared to the prior art capstan drives. A signal from at least one of the tape rollers 16, 18 is used normally for the tape speed measurement. Measuring the tape speed from a tape driven roller is the most direct way to measure the tape speed.

During start up and stopping the instantaneous tape speed measurement from a flutter roller may be inaccurate because of inadequate tape tension. In such a case, the take up reel tachometer can be used for tape speed measurements until, tachometer pulses are received from both flutter roller tachometers or from the supply reel tachometer and then the flutter roller tachometer can be used for tape speed control. A description of such start up and stopping tape speed control can be obtained from copending application U.S. Serial No. _____ naming Georg Boasson and Erik Hardeng as inventors, and assigned to the same Assignee as the present application and identified as Attorney Docket No. P96,0647, and filed on the same day as the present application.

The second flutter roller 18 is used to obtain a symmetrical tape path, which is advantageous in a bi-directional tape transport. The two tape flutter rollers also absorb a high frequency speed variation, known as flutter. The lower frequency speed variations are taken care of by the tape speed servo circuit of the controller $\underline{C}$.

The tape 14 is wrapped around the tape rollers 16, 18 circumscribing a significant angle. It has been found that this reduces the total tape friction, and accordingly reduces the tape tension at the take up reel 20.

The controller $\underline{C}$ has tape speed servo circuitry and tape tension servo circuitry. The tape speed servo circuitry receives a tachometer signal $S_1$ from the tape roller tachometer 42 (or tachometer 46) via the pulse processor $\underline{P}$, to calculate tape speed. Tape speed is most accurately measured directly by the tachometer frequency from the flutter roller 18 (or 16):

v is tape speed
$n_{tr}$ is tape roller tachometer frequency
$r_{tr}$ is tape roller radius in tape path
$N_{tr}$ is number of tachometer pluses per rotation of the tape roller

$$v = n_{tr} \cdot 2 \cdot \pi \cdot \frac{r_{tr}}{N_{tr}}$$

The controller $\underline{C}$ compares the tape speed with a preselected reference tape speed and sends to the motor 20 (take-up motor) a correction signal $S_2$, to increase or decrease rotary speed. The correction signal can be a signal to a motor controller having a power amplifier to increase electric power to drive the motor.

The tachometer signal $S_1$ can be transferred into a voltage which is proportioned to tape speed. An analog part of the servo circuit can consist of an amplifier and a filter. The amplifier compares two voltages, the preselected reference tape speed and the voltage proportional to the measured tape amplified and low pass filtered, so that the servo loop is stable.

The distance between the take up tape reel 20 and the tape roller 16 becomes an important part of the servo loop. The distance adds a delay and low pass filter to the servo transfer function. This must be taken into account in order to achieve a stable servo loop. The tape roller 16 as flutter type roller, is designed with low inertia to reduce the delay and low pass filter effect. The tape roller tachometer 46 is so accurate that the servo loop becomes an electronic flywheel.

A signal $S_6$ from the take up reel tachometer 45 may be compared to a tape roller tachometer signal $S_7$ from the tachometer 46. These speeds allow for the calculation of the radius of the tape fill on the take up reel 20. This radius affects the servo loop stability. Thus, information about this radius may be used to vary the loop gain so that the servo loop is stable from the beginning to the end of the tape.

Tape tension is determined, not by a mechanical element which adds to tape path friction and other problems, but by comparing the relative pulse frequencies of the roller tachometer 42 with the supply reel tachometer 36. By knowing the relative rotational velocities, the amount of tape on the supply reel can be determined and the appropriate amount of rotary resistance, or "braking moment" can be applied to the supply reel motor. The controller $\underline{C}$ for example receives the pulse frequency signal $S_3$ from the supply reel tachometer 36 via the processor $\underline{P}$ and using the signal $S_1$ calculates the required braking moment for the supply reel 24, by signal $S_4$ to the motor 40. As the tape depletes from the supply reel 24 to the take up reel 20, the braking moment on the motor 40 must decrease to maintain constant tape tension. The controller $\underline{C}$ periodically recalculates using the signals $S_1$ and $S_3$ and controls the current on the motor 40 by signal $S_4$. Current on the motor 40 can be measured as signal $S_5$, the signal $S_5$ being a correction signal fed back to the controller as part of a tension servo loop.

Tape tension is calculated from pulse frequencies of the supply reel tachometer and from one of the flutter roller tachometers. Many different formulas for accurate or approximated calculation of tape tension may be used. Also, if the cassette gives information on tape thickness and tape length, the tape tension can be calculated by use of this data and pulse frequencies on both tape reels. The calculated supply reel motor current for maintaining a reference, constant tape tension is described below.

M is motor torque on supply reel
$n_{tr}$ is tachometer frequency for the tape roller
$N_{tr}$ is number of tachometer pulses per rotation for the tape roller
$n_{sr}$ is tachometer frequency for the supply reel
$N_{sr}$ is number of tachometer pulses per rotation for the supply reel
F is tape tension between the tape roller and the supply reel
$r_{tr}$ is radius of the tape roller in the tape path.

$$M = \frac{n_{tr}}{N_{tr}} \cdot \frac{r_{tr}}{n_{sr}} \cdot N_{sr} \cdot F$$

The motor current "$I_{MOT}$" is calculated as follows:
$M = k_T \cdot I_{MOT} \rightarrow I_{MOT} = M/k_T$ where $k_T$ = motor constant (torque constant), Nm/A (Newton meter/Ampere), so

$$I_{MOT} = \frac{1}{k_T} \cdot \frac{n_{tr}}{N_{tr}} \cdot \frac{r_{tr}}{n_{sr}} \cdot N_{sr} \cdot F$$

A full supply reel has a lower speed, a lower tachometer frequency and therefore has a higher motor current $I_{MAX}$. An almost empty reel has a higher speed, a higher tachometer frequency and a lower current $I_{MIN}$.

The tension servo is a feed-forward or estimator regulator which controls motor current in the supply motor to act as a brake.

A particularly advantageous use of the controller $\underline{C}$ is to secure sufficient tape tension at the start of write or read, by temporarily setting the brake moment on the supply reel primarily at least to the same level as expected for a supply reel full of tape given constant tension, regardless of the actual amount of tape on the supply reel. This braking is then softly reduced when the controller has got information about the speeds of reels and rollers to make corrections by an electronic brake control circuit of the controller $\underline{C}$.

The controller $\underline{C}$ also provides for a regulated winding mode wherein the winding mode will not be started at full speed until the controller has enough information to ensure that there is enough tape length to the ultimate end of the tape on the supply reel. The tape length remaining on the supply reel can be calculated using the comparative tachometer signals from the supply reel and a flutter roller; or from the supply reel and take up reel. Particularly, the signal from the supply reel tachometer can be compared with the signal from one of the flutter roller tachometers. As the tape depletes on the supply reel, given a constant linear tape speed, its number of rotations per time interval increases compared to a constant rotational speed of the flutter roller tachometer. Given a prior knowledge of the thickness of the tape and the radius of the innermost winding on the supply reel hub, a calculation of remaining tape on the supply reel can be made. Examples of methods of calculating remaining tape are given by U.S. Patents 5,309,300 and 4,557,434.

If this calculated tape length is shorter than a preselected distance, the controller $\underline{C}$ ensures that the winding can only be undertaken at a reduced speed. If the remaining tape length is greater than the stop length, the winding speed can be increased to the full winding speed. During winding wherein the stop length is reached as calculated by the controller, the braking is commenced, at a predetermined deceleration.

The controller $\underline{C}$ on the supply reel is designed to ensure that tape tension from the reel is constant. Simultaneously, the tape speed control on the take up reel 20 is designed to ensure that tape speed is as constant as possible. Thus, take up reel tension will be almost constant, only compensating for variation of tape friction in the tape path.

Consequently, outer turns of tape on the take up reel 20 are wound up with higher motor moments than the motor moments used while the inner turns on the take up reel are wound. Also, when writing or reading is made after a period of winding in the same direction, harder wound outer turns on the take up reel occur. Outer turns on the take up reel may from time to time skid or slip on the inner turns, and there is a risk that uncontrolled tape tension "shocks" or increases occur.

To minimize the risk of skid between outer and inner turns, during writing or reading, each new period of writing or reading is started with a short duration, controlled tape tension increase or controlled tension "shock" having a tension amount higher than the predetermined reference tension, before the writing or reading itself takes place to prevent tension shocks occurring later when reading or writing.

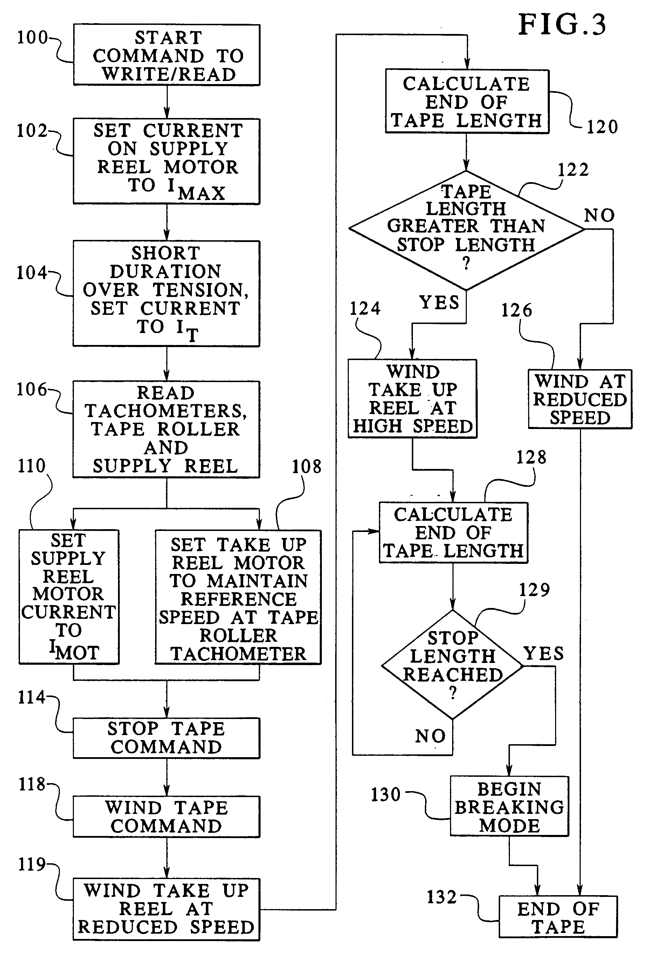

Figure 3 illustrates algorithmically the operation of the tape drive of the present invention. For example, at step 100 a command is given to initiate reading or writing. At step 102, the current at the supply reel motor is set to $I_{MAX}$ which is the braking current corresponding to a full supply reel. At step 104 the supply reel is given a short voltage increase to over tension the tape. This voltage increase causes a supply reel motor current corresponding to "$I_T$" as the braking resistance to the supply reel, the torque of the take up motor then increases tension in the tape sharply for a short duration. Typically, $I_T > I_{MAX}$. The duration of this overtension is estimated to be for less than or equal to 0.5 seconds. The magnitude is estimated to be less than or equal to 2 x $I_{MAX}$. This overtension of the tape helps tighten the rolled tape to prevent "skidding" or "slipping" during a subsequent reading or writing operation.

Tachometer signals are received from one tape roller and the supply reel at step 106. During steps 108, 110, simultaneously, the take-up reel speed is servo adjusted to maintain correct tape speed and the supply reel braking resistance is adjusted downwardly from maximum to the preselected reference tape tension by the tension servo the motor current $I_{MOT}$ corresponding to the calculated amount of tape on the supply reel.

At some later time, for example, the tape is stopped at step 114. A particular selected winding operation ensues such as backward or forward ("rewind" or "fast forward") at step 118. The winding operation ensues at reduced speed at step 119. At step 120 the remaining length of tape is calculated. If the tape length is sufficient, a full speed winding ensues at step 124. If not, the reduced winding speed continues, step 126. During steps 128, 129, the tape length remaining is monitored continuously or intermittently. When the stop length is reached from a full speed winding, a soft braking occurs over its length at step 130. An end of tape is reached at step 132. The new read or write command can be renewed at step 100.

Although the present invention has been described with reference to a specific embodiment, those of skill in the art will recognize that changes may be made thereto without departing from the scope and spirit of the invention as set forth in the appended claims.

The features disclosed in the foregoing description, in the claims and/or in the accompanying drawings may, both separately and in any combination thereof, be material for realising the invention in diverse forms thereof.

## Claims

1. An apparatus for moving a supply of magnetic tape across a magnetic head, comprising:

   a first reel driven by a first motor and holding a supply of magnetic tape wound therearound;
   a second reel driven by a second motor and receiving magnetic tape from said first reel to be wound on said second reel;
   a tape roller arranged to press against a portion of said magnetic tape in a tape path between said reels;
   a first tachometer connected to rotate with said first reel, and a second tachometer arranged to rotate with said tape roller, said first and second tachometers outputting speed signals proportional to respective rotational velocities; and
   a controller receiving said speed signals from said first and second tachometers and outputting correction signals to the first and second motors for the first and second reels to adjust tape tension and tape speed respectively.

2. The apparatus according to claim 1, wherein said connection signals to said first and second motors causes an initial short duration controlled tension increase in the tape at the beginning of each new period of writing or reading.

3. The apparatus according to claim 1, further comprising a calculating circuit to determine the amount of tape remaining from an instantaneous position to an end of tape position by using the speed signals from said first and second tachometers and communicating that distance to said controller, and said controller sending a signal to said second motor driving said second reel to wind in a direction toward the end of said tape at a predetermined speed dependent on said amount of tape remaining.

4. The apparatus according to claim 1, wherein said second reel comprises a third tachometer mounted for rotation therewith and further comprising an additional tape roller with a fourth tachometer mounted for rotation therewith, and said controller is configured to adjust control for bi-directional tape movement.

5. The apparatus according to claim 1, wherein said controller comprises a tape speed servo circuit and a tape tension servo circuit, said tape speed servo circuit receiving said speed signal from said second tachometer and issuing a speed correction signal to said second motor, said tape tension servo circuit receiving a motor current signal from said first motor and comparing said motor current signal with a calculated motor current value, said calculated motor current value derived arithmetically from said speed signals from said first and second tachometers, and said tape tension servo circuit issuing a tension correction signal to said first motor.

6. The apparatus according to claim 1, wherein said controller comprises a tape speed servo circuit, said tape speed servo circuit receiving said speed signal from said second tachometer and issuing a speed correction signal to said second motor.

7. The apparatus according to claim 1, wherein said controller comprises a tape tension servo circuit, said tape tension servo circuit receiving a motor current signal from said first motor and comparing said motor current signal with a calculated motor current value, said calculated motor current signal value derived arithmetically from said speed signals from said first and second tachometers, and said tape tension servo circuit issuing a tension correction signal to said first motor.

8. A method for controlling the movement of magnetic tape between reels in a tape drive, comprising the steps of:

   providing first and second reels mounted for rotation and having a supply of magnetic tape coiled on said first reel and wrapped around said second reel, said first reel acting as a supply reel and said second reel acting as a take-up reel;
   turning said first and second reels at controlled speeds to provide a constant linear speed of said magnetic tape past a magnetic head;
   sensing said linear speed of said magnetic tape by a tape speed sensor;
   during rotation of said first and second reels controlling speed of said first reel by a servo loop to ensure that said sensed linear velocity of said tape meets a preselected tape speed value;
   during rotation of said first and second reels, controlling a resistance to rotation of said first reel to set a constant preselected tension in said magnetic tape by decreasing resistance to rotation of said first reel as tape is depleted from said first reel to be wound on said second reel, by using the sensed linear speed signal of said tape and a measured rotational speed of said first reel to determine the fill of tape on said first reel to calculate and control the proportional amount of resistance to rotation.

9. The method according to claim 8, comprising the further step of:

during initial start of rotation of said first and second reels, initially setting the rotary resistance of said first reel to its maximum value corresponding to the value of the first reel being full of tape and constant preselected tape tension, notwithstanding the actual tape fill on the first reel, for a brief period, and then gradually reducing the resistance to rotation to a level proportionate to the actual tape amount on the first reel to maintain constant tape tension.

10. The method according to claim 8, comprising the further steps of stopping said reels; winding said second reel at a first speed; calculating the distance between the end of tape in a winding direction of the tape horn an instantaneous position of the tape and if that distance is less than a predetermined stop length, maintaining said first speed; and if that distance is greater than the predetermined stop length, increasing the winding speed of said second reel.

11. The method according to claim 8, comprising the further step of before instigating turning of said second reel, increasing resistance to rotation of said first reel to provide a short tension increase in said tape, above the constant preselected tension in said magnetic tape, and then decreasing the resistance to rotation to return to said preselected tension.

12. An apparatus for moving a supply of magnetic tape across a magnetic head, comprising:

a first reel driven by a first motor and holding a supply of magnetic tape wound therearound;
a second reel driven by a second motor and receiving a magnetic tape from said first reel to be wound on said second reel;
a flutter roller arranged to press against a portion of said magnetic tape in a tape path between said reels;
a first tachometer connected to rotate with said first reel, and a second tachometer arranged to rotate with said flutter roller, said first and second tachometers outputting pulse frequency signals proportional to respective rotational velocities;
a controller receiving said pulse frequency signals from said first and second tachometers, said controller having a speed servo circuit and a tension servo circuit, said speed servo circuit adjusting speed of said second reel using said pulse frequency signal from said second tachometer to maintain a constant tape speed, said tension servo circuit receiving signals from said first and second tachometers to calculate an amount of tape on said first reel and sending a braking resistance correction signal to said first reel to maintain a predetermined reference tape tension.

13. The apparatus according to claim 12, wherein said braking resistance signal adjusts the motor current of the first motor, and further comprising a motor current feedback signal measuring actual motor current and communicating said feedback signal to said tension servo circuit.

14. The apparatus according to claim 13, wherein said braking resistance signal and said feedback signal adjust the actual motor current according to the relationship:

$$I_{MOT} = \frac{1}{k_T} \cdot \frac{n_{tr}}{N_{tr}} \cdot \frac{r_{tr}}{n_{sr}} \cdot N_{sr} \cdot F$$

wherein,

M is motor torque of said first motor;
$n_{tr}$ is tachometer frequency of said second tachometer;
$N_{tr}$ is number of tachometer pulses per rotation for the second tachometer;
$n_{sr}$ is tachometer frequency for said first tachometer;
$N_{sr}$ is number of tachometer pulses per rotation of said first tachometer;
F is preselected reference tape tension;
$r_{tr}$ is radius of said tape roller;
$k_T$ is a motor constant experimentally derived.

15. The apparatus according to claim 14, further comprising a second flutter roller arranged to press said tape at a distance from said first flutter roller, and said controller is arranged for bi-directional tape operation.

# FIG.1

# FIG.2

# FIG.3

```
100 → START
       COMMAND TO
       WRITE/READ

102 → SET CURRENT
       ON SUPPLY
       REEL MOTOR
       TO I_MAX

104 → SHORT
       DURATION
       OVER TENSION,
       SET CURRENT
       TO I_T

106 → READ
       TACHOMETERS,
       TAPE ROLLER
       AND
       SUPPLY REEL

110 → SET              108 → SET TAKE UP
       SUPPLY                 REEL MOTOR
       REEL                   TO MAINTAIN
       MOTOR                  REFERENCE
       CURRENT                SPEED AT TAPE
       TO                     ROLLER
       I_MOT                  TACHOMETER

114 → STOP TAPE
       COMMAND

118 → WIND TAPE
       COMMAND

119 → WIND TAKE UP
       REEL AT
       REDUCED SPEED
```

```
       CALCULATE
       END OF
       TAPE LENGTH  → 120

       TAPE
       LENGTH
       GREATER THAN → 122
       STOP LENGTH     NO
       ?

124 ↓ YES        126 ↓
       WIND            WIND AT
       TAKE UP         REDUCED
       REEL AT         SPEED
       HIGH SPEED

       CALCULATE
       END OF     → 128
       TAPE LENGTH

       STOP        → 129
       LENGTH        YES
       REACHED
       ?

       NO

130 → BEGIN
       BREAKING
       MODE

132 → END OF
       TAPE
```

**European Patent Office**

## EUROPEAN SEARCH REPORT

**Application Number**

EP 97 11 8199

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 148 336 A (ASAI SHIGEMI ET AL) 15 September 1992<br>* abstract; figures 14-15B * | 1,3,5-8, 12,13 | G11B15/54<br>G11B15/48 |
| A | * column 15, line 6 - column 18, line 32 * | 4,9-11, 14,15 | |
| A | US 5 367 471 A (NGUYEN THAI ET AL) 22 November 1994<br>* abstract; figures 1,6 *<br>* column 8, line 16 - column 9, line 26 * | 8,9 | |
| A | US 3 883 893 A (UEKI YOSHIHARU ET AL) 13 May 1975<br>* abstract; figure 3 *<br>* column 3, line 56 - column 4, line 28 * | 1,2,8,11 | |
| A | US 5 209 422 A (LEE CHUN-SUNG) 11 May 1993<br>* abstract; figures 2A-4 *<br>* column 2, line 29 - column 4, line 5 * | 1,3,8,10 | |
| A | US 4 381 089 A (KONDO SHIGEYUKI) 26 April 1983<br>* abstract; figures 1-3 *<br>* column 2, line 26 - column 4, line 35 * | 1,3,8,10 | **TECHNICAL FIELDS SEARCHED (Int.Cl.6)**<br><br>G11B |
| A | EP 0 506 169 A (THOMSON BRANDT GMBH) 30 September 1992<br>* abstract; figures 1,2 *<br>* page 3, line 22 - page 6, line 34 * | 1,3,8,10 | |

The present search report has been drawn up for all claims

| Place of search | Date of completion of the search | Examiner |
|---|---|---|
| THE HAGUE | 21 January 1998 | Pariset, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)